# EUROPEAN PATENT SPECIFICATION

(11) **EP 3 035 808 B1**
(45) Date of publication and mention of the grant of the patent: **14.06.2017**
(21) Application number: 14736013.5
(22) Date of filing: 27.06.2014
(51) Int. Cl.: A23L 27/40

(54) **METHOD OF PRODUCING SALT COMPOSITION**
VERFAHREN ZUR HERSTELLUNG EINER SALZZUSAMMENSETZUNG
PROCÉDÉ DE PRODUCTION D'UNE COMPOSITION DE SEL

(30) Priority: 31.07.2013 US 201361860425 P
(43) Date of publication of application: 29.06.2016
(73) Proprietor: Tate & Lyle Ingredients Americas LLC, Hoffmann Estates, IL 60192 (US)
(72) Inventor: SHEN, Shiji, Algonquin, Illinois 60102 (US); HOFFMAN, Andrew J., Tipperacnoe County, Indiana (US); BUTLER, Susan E, Decatur, Illinois 60014 (US)
(74) Representative: Atkinson, Peter Birch
(86) International application number: PCT/GB2014/051961
(87) International publication number: WO 2015/015151

(56) References cited:
- WO-A1-2009/133409
- US-A1- 2011 097 449

## Description

### Field of the Invention

The present invention relates generally to salt (i.e. sodium chloride) and more particularly to a method of producing a salt composition which is suitable for use in a "reduced salt" diet whilst maintaining taste levels normally associated with higher amounts of salt. The composition is one which has a particle size significantly lower than "normal salt" but which nevertheless remains free-flowing.

### Background of the Invention

Unless the context otherwise requires, the term "salt" as used herein refers to sodium chloride (chemical formula NaCl) and the two terms are used herein interchangeably.

Salt is extensively used for the seasoning/flavouring of foodstuffs since it is often felt that food without a sufficient amount of salt lacks taste. Salt is used in the preparation of cooked foods both in the home, restaurants etc. and also in the food industry for the production of pre-prepared foods such as bread, various meat products, ready-meals, savoury snack foods etc. Salt is of course also used as a condiment for sprinkling on food to enhance the taste thereof, usually just prior to consumption.

Although salt has had widespread use for literally hundreds of years, it is now recognised that too much salt (and more particularly the sodium ions provided by the salt) has adverse health implications and can be a causal factor in high blood pressure which in turn provides an increased risk of heart disease and stroke. Against this background, there is a drive to reduce salt intake in the diet. In this respect, current US dietary guidelines recommend that adults should, in general, have a daily sodium intake of no more than 2300 mg which equates to about 6 g of salt per day assuming no other sodium intake in the diet. The recommended level of 2300 mg per day is reduced to 1500 mg per day for individuals falling within certain groups, e.g. those aged 51 years or over.

One strategy for reducing salt intake is to replace salt in the diet by another metallic chloride, usually potassium chloride even though this compound is often considered to have a bitter or metallic off-taste. Thus, for example, US 2008/0085360 A1 discloses production of a salt substitute by a process comprising the steps outlined below.

In a first step, an aqueous admixture is produced which comprises a metallic chloride (other than sodium chloride), preferably potassium chloride, and a "modifier". The "modifier" is a compound that increases the solubility of the metallic chloride and provides an acidic pH. Additionally, the "modifier" preferably provides at least a contribution to masking the taste of the metallic chloride in the final composition. Preferred "modifiers" are food grade acidulates, e.g. citric acid. In accordance with the preferred embodiment of US 2008/0085360, the aqueous admixture comprises from about 15% to about 30% by weight of the metallic chloride (preferably potassium chloride), from about 0.1% to 3% by weight of food grade acidulant and about 60% to 80% water.

In a second step, a "carrier" is added to the aqueous admixture obtained from the first step. The carrier is one that, in combination with the modifier, masks the bitter or metallic off-flavour associated with the chloride salt. The carrier is preferably used in an amount of 10% to 25% by weight of the aqueous admixture and may for example be maltodextrin.

In a third step, the aqueous formulation resulting from the second step is converted to a powdered or granular product, for example by spray-drying.

In a final step, the powdered or granular product is blended with sodium chloride (e.g. in the proportion of two parts by weight sodium chloride to one part by weight of the powdered/granular product), and the resulting mixture then milled or ground to a desired particle size, e.g. a particle size larger than about 100 mesh, U.S. standard sieve size (i.e. larger than about 149 microns). In preferred embodiments of the process, silicon dioxide is included in the final product (e.g. an amount of 0.1% to about 2% by weight) as a flow-aid to prevent caking of the product.

The resulting product, which is rendered free-flowing by the inclusion of the silicon dioxide, thus comprises both sodium chloride and another metallic chloride (e.g. potassium chloride) and may be used for the purposes of a reduced salt diet.

An alternative strategy for reducing sodium intake is to produce salt compositions in which sodium chloride is the sole metallic chloride and which have a higher degree of "saltiness" than conventional salt. In principle, this could be achieved by milling conventional salt to a low particle size, and therefore a high surface area salt composition. The high surface area would provide for enhanced "saltiness" so that the same "seasoning level" could be achieved using a lower amount of the finely milled salt than of the conventional salt (of larger particle size and therefore lower surface area). However, finely milled salt is very hygroscopic and so quickly re-agglomerates unless protected using expensive or complex storage systems. Thus, simply milling salt to a fine particle size is not a practical option.

A significant advance in the production of small particle size salt compositions is disclosed in WO 2009/133409 A1 (Eminate Ltd.) which teaches a salt product in which the individual particles comprise salt (i.e. sodium chloride) and a minor proportion by weight (e.g. up to 20% by weight) of an organic material that is a solid at ambient temperature. The organic material may, for example, be a polymeric material, e.g. a carbohydrate such as maltodextrin or Gum Arabic. The particles of the salt product have a structure comprised of individual crystallites of sodium chloride attached together in the particle. Within the salt product, there are hollow particles formed of an outer shell of the sodium chloride crystallites. The salt product may comprise a significant proportion, e.g. more than 50% by number, of the hollow particles. The particles are of narrow particle size distribution and at least 95% of the particles may have a size less than 100 µm, more preferably less than 50 µm. The Examples of WO 2009/133409 A1 disclose the production of salt products in which the particles have a mean particle size in the range of 6 µm to 30 µm and are of narrow particle size distribution.

In spite of the small size of the particles of the salt product disclosed in WO 2009/133409, the product remains free-flowing. In this respect, Example 1 of WO 2009/133409 discloses production of a product that did not form agglomerates or clumps when stored under ambient conditions over a period of 18 months. This is in complete contrast to salt of similar particle size obtained by milling which, due to the hygroscopic nature of the salt, quickly agglomerates and forms clumps.

The salt product of WO 2009/133409 A1 has a number of significant advantages related to its small particle size and the presence of a fraction of hollow particles. In particular, the small particle size provides high surface area so giving the taste sensation of enhanced "saltiness". Secondly, since the taste of the product is derived from the contact of its surface with the consumer's taste buds, the fact that there is a (potentially substantial) fraction of hollow particles means that the taste impact is obtained (from the small sized particles) but without introducing "excess" salt in the interior of the particle. Put another way, there will to a first approximation be the same taste impact irrespective of the number of hollow particles, so the higher the fraction of hollow particles the less will be will be the amount of salt consumed for the same taste impact.

The salt product disclosed in WO 2009/133409 may be produced by spray-drying an aqueous composition which comprises dissolved sodium chloride and also dissolved organic material, which may for example be a carbohydrate, protein or synthetic organic polymer, preferred examples of organic material being maltodextrin and Gum Arabic.

Products in accordance with the teachings of WO 2009/133409 are marketed by Tate & Lyle under the trade mark Soda-Lo®. One product in the range is Soda-Lo® Extra Fine which has an average particle size of about 20 microns and is particularly suitable for incorporation within a food matrix for providing seasoning for the food.

Another product within the range is Soda-Lo® Fine which has a mean particle size of about 200 µm. Soda-Lo® Fine may be used for topical application to provide the appearance of salt, e.g. on a saltine, bagel or breadstick. Soda-Lo® Fine may also be used as a blend with flavoured particulate seasonings to produce a "salty seasoning" for topical application to neutral tasting edible substrates (e.g. crackers). Soda-Lo® Fine can also be used for any other food seasoning application. Without limitation, the Soda-Lo® Fine may be used for seasoning meat products, fish products and bread products. In one particular application, the Soda-Lo® fine may be incorporated in a precursor of a foodstuff which is then cooked to produce the foodstuff.

Currently Soda-Lo® Fine is prepared by a traditional two-step milling process in which salt crystals with a mean particle size greater than about 500µm are milled to give a powder with a mean particle size in the range 150µm - 250µm and the resulting powder (75% by weight) is then mixed with Soda-Lo® Extra Fine particles (25% by weight). There are however problems associated with this process in that as the salt crystals are milled a hygroscopic powder is produced (due to the presence of salt particles having a size less than 100 µm) and as a result (and in the absence of special and elaborate methods) the salt tends to aggregate. This aggregation can occur during milling and/or during storage and transportation of the salt powder prior to blending with the Soda-Lo® Extra Fine. The aggregation not only reduces the milling efficiency but also causes difficulties during the blending of the salt powder with the Soda-Lo® Extra Fine since additional energy and more complicated equipment may be required to break the aggregates completely.

It is an object of the invention to obviate or mitigate the abovementioned disadvantages.

### Summary of the Invention

Free-flowing salt compositions are prepared by comminuting (e.g. by milling or otherwise grinding) sodium chloride crystals having a mean particle size by volume of at least 500 µm in the presence of (i.e. in admixture with) a salt product comprised of particles which contain (a) sodium chloride and (b) an organic material that is a solid at ambient temperature and which have a structure comprised of individual crystallites of sodium chloride attached together in the particles of the product wherein at least 95% by volume of the particles of the salt product have a size less than 100 µm and wherein particles of the product comprise hollow particles formed of an outer shell of said crystallites.

The sodium chloride crystals may be comminuted so as to have a mean particle size by volume in the range of 150 µm to 250 µm, e.g. about 200 µm.

Surprisingly, we have found that the comminution of the relatively large salt crystals in the presence of the salt product improves efficiency by preventing the formation of aggregates of salt crystals in the comminution procedure and allows for a significant reduction in the time required to reduce the salt crystals to a particular particle size, as compared to the case when the salt crystals are milled or otherwise comminuted in the absence of the salt product. The salt product (which may be of the type described in WO 2009/133409 A1 (Eminate) acts as an anti-caking agent during the comminution process without the need for an additional anti-caking agent (e.g. silicon dioxide) and allows the production of a salt composition of the type described above as Soda-Lo® Fine much more rapidly than the conventionally used method and without the need to take special steps to prevent agglomeration of the milled salt.

The presence of the salt product in the salt composition produced in accordance with the invention not only provides for an anti-caking effect but also ensures that the composition provides a "high taste impact", for similar reasons explained above in relation to Soda-Lo® Extra Fine. Salt compositions produced in accordance with the invention therefore have particular utility for "reduced salt diets". Whilst bearing some similarity to Soda-Lo® Fine, salt compositions in accordance with the invention may be produced much more easily by the milling of the salt crystals in the presence of the salt product than by separate milling of salt crystals and subsequent blending with the salt product.

Unless stated otherwise, particle sizes and particle size distributions as referred to herein for the salt compositions produced by the method of the invention and the materials from which they are produced are determined using an LS13 320 Laser Diffraction Size Analyser (ex Beckman Coulter).
Further objects and advantages of the present invention will be clear from the subsequent description.

### Brief Description of Drawings

Fig. 1 shows particle size distributions of (i) Soda-Lo® Extra Fine, and (ii) sea-salt as used in Examples 1 and 2;
Fig. 2 shows a SEM micrograph (x350) of Soda-Lo® Extra Fine;
Fig. 3 shows the particle size distribution of a composition as obtained in accordance with the procedure of Example 1 by milling sea salt in the presence of Soda-Lo® Extra Fine;
Fig. 4 shows a SEM micrograph (x350) of a sieved fraction of the composition produced in accordance with Example 1;
Fig. 5 shows the particle size distribution of milled salt produced in the procedure of Example 2 below;
Fig. 6 shows the particle size distribution of the composition obtained in accordance with Example 2 by blending milled salt and Soda-Lo® Extra Fine;
Fig. 7 shows particle size distributions of (i) Soda-Lo® Extra Fine, and (ii) sea-salt as used in Examples 3 to 5;
Fig. 8 shows the particle size distribution of a composition as obtained in accordance with the procedure of Example 3 by milling sea salt in the presence of Soda-Lo® Extra Fine;
Fig. 9 shows the particle size distribution (measured in percent by volume) of milled salt produced in the procedure of Example 4;
Fig. 10 shows particle size distributions of the compositions obtained in accordance with Examples 3 and 4;
Fig. 11 shows particle size distributions of compositions obtained in accordance with the procedure of Example 5; and
Fig. 12 shows the particle size distributions of two selected products produced in accordance with Example 5 in comparison with the product of Example 3;

### Description of Preferred Embodiments

The method of the invention produces a free-flowing salt composition by comminuting a first particulate fraction comprised of sodium chloride crystals having a mean particle size by volume of at least 500 µm, in the presence of a second particulate fraction which is a salt product comprised of particles which contain (a) sodium chloride and (b) an organic material that is a solid at ambient temperature and which have a structure comprised of individual crystallites of sodium chloride attached together in the particles of the product wherein at least 95% by volume of the particles of the salt product have a size less than 100 µm and wherein particles of the product comprise hollow particles formed of an outer shell of said crystallites.

In the salt composition produced, the sodium chloride crystals may have a size up to a maximum of 400µm with the salt composition having a particle size distribution by volume in which there is a mean particle size in the range of 150 µm to 250µm. In more preferred compositions, the sodium chloride crystals have a size up to a maximum of about 300 µm. Alternatively or additionally the mean particle size may be in the range of 180 µm to 220 µm, most preferably about 200 µm.

The first particulate fraction (i.e. the fraction comprised of salt crystals having a mean particle size by volume of at least 500 µm) preferably comprises a major proportion by weight of the combined weight of the first and second particulate fractions. The first particulate fraction may comprise 65% by weight to 85% by weight (with the second particulate fraction comprising 15% to 35% by weight) of the combined weight of the two fractions. More preferably, the first particulate fraction comprises about 70% by weight to about 80% by weight (and the second particulate fraction comprises about 20% by weight to about 30% by weight) of the combined weight of the two fractions. Even more preferably, the first particulate fraction comprises about 75% by weight and the second particulate fraction comprises about 25% by weight of the combined weight of the two fractions.

The salt product used as the "second particulate fraction" in the method of the invention is comprised of particles containing (i) sodium chloride, and (ii) an organic material that is a solid at ambient temperature, most preferably at 15° to 35°C, more preferably 15°C to 25°C (although it may also be solid at a temperature outside these ranges). The particles of the salt product comprise a minor proportion by weight (e.g. up to about 20% by weight of the organic material and have a structure comprised of individual crystallites of sodium chloride attached together within the particles. Additionally, this salt product comprises at least a proportion of hollow particles comprised of an outer shell formed of individual crystallites of salt attached together to form the shell, which itself surrounds the hollow interior cavity of the particle. The shell may be "complete" in the sense that the hollow interior cavity is fully encased by the shell. Alternatively, the shell may not be fully complete. The structure of the hollow particles and the individual crystallites may readily be visualised under a Scanning Electron Microscope at an appropriate magnification (e.g. x5000).

The hollow particles preferably comprise at least 30% of the particles in the salt product, more preferably at least 40% and still more preferably comprise a substantial proportion of the sat product, i.e. more than 50%. The proportion of hollow particles is preferably at least 60%, more preferably at least 70% and even more preferably at least 80% and still more preferably at least 90% of the second particulate fraction. The ideal is 100%, but in practice the salt product fraction may comprise 50-90% of the hollow particles. The percentage of hollow particles may be assessed on a numerical basis by examining the second particulate fraction under a suitable magnification (e.g. using a scanning electron microscope) and counting the number of hollow particles as compared to the number of any solid particles. Generally a magnification of x500 to x2000 will be suitable for this purpose, although the skilled person can readily select the most appropriate value.

The organic material, which forms a component of the particles (hollow or otherwise) of the salt product is preferably partially, and ideally substantially, soluble in water and may, for example, be a natural or synthetic polymer. The material may, for example, be a carbohydrate, e.g. an oligosaccharide or a polysaccharide. Alternatively the material may be a protein. Mixtures of such polymer types can also be used. If the polymer is a carbohydrate then it may, for example, be one or more of maltodextrin (e.g. Fibresol), Gum Arabic, starch (e.g. soluble corn starch, potato starch or soya bean starch, hydroxypropyl cellulose, Merigel (starch), Miramist SE (Modified Starch), Promitor L70 (Soluble gluco fibre), Locust Bean Gum (Genu gum), Maltosweet 120 (Maltodextrin), Gellan Gum, Low Acyl (Kelcogel F), Pullulan, Xanthan Gum (Keltrol T) and Pectin (Genu pectin).

The salt product has a particle size such that at least 95% by volume of the particles of the salt product have a size less than 100 µm, more preferably less than 50 µm. The particles of the second particulate fraction may, for example, have a mean particle size in the range of 5 µm to 30 µm, e.g. in the range 15 µm to 25 µm and may be of narrow particle size distribution.

The salt product for use as the second particulate fraction may be produced by the steps of:
(i) providing a mixture which comprises salt and the organic material dissolved in a solvent, preferably water for the case where the organic material is water soluble; and
(ii) atomising the mixture to produce atomised droplets and evaporating solvent (preferably water) from the atomized droplet to produce particles containing (i) salt, and (ii) the organic material and having a structure comprised of individual crystallites of sodium chloride attached together in the particle, which particles of said hollow product comprise hollow particles formed of a outer shell of the crystallites.

Step (ii) may be effected by spray drying.

The second particulate fraction may be a salt product of the type disclosed in WO 2009/133409 A1 (Eminate Ltd) which also discloses the method of producing the salt product.

In a preferred embodiment of the invention, the salt product is provided by the product commercially available under the name Soda-Lo® Extra Fine which is produced in accordance with the teachings of WO 2009/133409 and which has an average particle size by volume of about 20 µm.

The first particulate fraction for use in preparing a salt composition in accordance with the invention is comprised of salt crystals having a mean particle size of at least 500 µm. These salt crystals may be any conventionally available salt suitable for food (alimentary) use. The salt may, for example, be sea-salt (i.e. derived by evaporation of sea water) or refined rock salt. However any of the wide variety of alimentary acceptable salts with a mean particle size greater than 500 µm may be used for the purposes of producing the salt composition in accordance with the invention.

The method of the invention effects comminution of the first particle fraction (comprised of sodium chloride crystals having a mean particle size by volume of at least 500 µm in the presence of the second particulate fraction comprised of the salt product, for which at least 95% by volume of the particles have a size less than 100 µm. The comminution procedure will effect a size reduction of the sodium chloride crystals of the first particulate fraction but, depending on the comminution procedure used, may or may not cause fragmentation (or significant fragmentation) of the particles of the salt product. In preferred embodiments of the invention, there is no significant fragmentation of the particles of the salt product (and particularly no significant fragmentation of the hollow particles thereof).

It is particularly preferred that the comminution is a milling operation, most preferably effected using a roller mill. In this regard, a roller-mill may readily be set up with the appropriate rollers and gap spacing therebetween so as to effect the required degree of comminution of the first particulate fraction whilst not causing fragmentation (or any significant fragmentation) of the particles of the salt product.

Alternatively, but less preferred, the comminution may be effected by tumbling the first and second particulate fractions with grinding members to effect a comminuting action. The grinding members may be spherical, cylindrical or of any other geometric configuration. This embodiment of the invention may be effected by ball-milling.

Irrespective of the manner in which the milling operation is effected, the first and second particulate fractions are ideally thoroughly blended together before being supplied to the comminution operation, although this not particularly required if the comminution operation is effected by tumbling the first and second particulate fractions with grinding members (as in ball-milling) since this operation blends the two fractions together.

The comminution operation is conducted for a sufficient length of time so that the first particulate fraction is comminuted to have a particle size distribution with a mean in the range of about 150 µm to about 250 µm, more preferably about 180 µm to about 200 µm and ideally about 200 µm. The time taken to achieve the desired reduction in particle size of the first particulate fraction will depend on factors such as type of milling apparatus, total amount of first and second particulate fractions, degree of particle size reduction. It is however well within the purview of the skilled person to determine when the desired size reduction has been achieved. This may be determined, for example, by taking samples at intervals from the milling operation and measuring the particle size distribution of these samples, from which it can easily be determined when milling has progressed to the required degree.

If desired, a third ("non-salt") particulate fraction may be mixed with the first and second particulate fractions and the mixture of the three fractions subjected to the comminution operation in which at least the first particulate fraction is comminuted. The third particulate fraction may comprise more than one component. The component(s) of the third particulate fraction are ideally "non-sticky" materials and may for example be a dry solid spice. Examples of such spices include, without limitation, paprika, cinnamon, turmeric, curry, cumin, pepper, garlic and combinations thereof.

As indicated above (and as demonstrated in the Examples below) there are two significant features associated with the comminution of the salt crystals of the first particulate fraction in the presence of the salt product of the second particulate fraction.. The first is that the time required to achieve a desired particle size reduction of the salt crystals is somewhat less than is the case when the crystals are milled "alone" (i.e. without addition of the salt product). The second is that the salt composition is produced in a "one-step" operation (as supposed to separate milling of the salt and subsequent blending with the salt product with consequential need to prevent agglomeration of the milled salt.

Salt compositions prepared in accordance with the invention may be used, for example, for the topical seasoning of food products by applying the salt composition to the food product. The salt composition may, if desired, be used as a blend with a "salty seasoning", the blend being intended for topical application to a relatively bland edible substrate (e.g. a cracker). The salt composition can also be used for any other food seasoning application. Without limitation, the salt composition may be used for seasoning meat products, fish products and bread products. In one particular application, the salt composition fine may be incorporated in a precursor of a foodstuff which is then cooked to produce the foodstuff. Further uses of the salt composition include tenderising, curing and seasoning meats, as well as canning, and pickling vegetables.

The invention is illustrated by the following non-limiting Examples which demonstrate production of various salt compositions using both with the method of the invention and comparative methods. In the following examples, all particle size distributions are as percent by volume and as measured using a LS13 320 Laser Diffraction Size Analyser (ex Beckman Coulter).

### Example 1 (Invention)

This Example demonstrates use of a roller mill in the method of the invention for the production of a salt composition by milling sea salt in the presence of Soda-Lo® Extra Fine.

The starting materials used in this Example were:
(i) Soda-Lo® Extra Fine (available from Tate & Lyle), and
(ii) Marcel sea-salt.

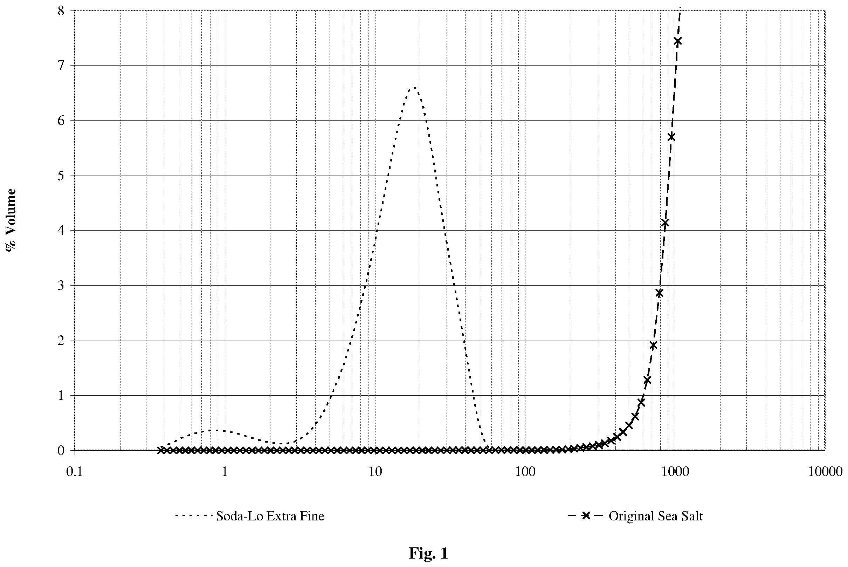

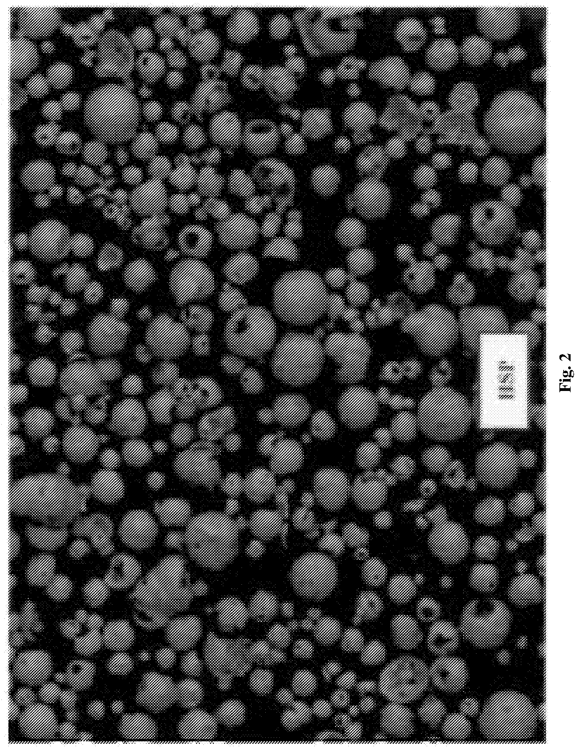

For the purposes of comparison, Fig. 1 shows the particle size distributions by volume of these two starting materials. As shown in Fig. 1, the Soda-Lo® Extra Fine had a mean particle size of about 20 µm and was narrow particle size distribution, with substantially all particles having a size less than 60 µm. Further, as can clearly be seen in the SEM (x350) of Fig. 2, Soda-Lo® Extra Fine is comprised of hollow particles.

In contrast, the sea-salt was of considerably larger particle size (most particles were in the size range 1 mm to 2 mm), with substantially all particles having a size greater than 200 µm.

A mixture comprised of 75% by weight of the sea salt and 25% by weight of Soda-Lo® Extra Fine was milled using three passes through a LPP Gran-U-Lizer, a laboratory scale roller mill (available from Modern Process Equipment, Chicago) having interchangeable rollers and with facility to vary the spacing between the rollers. The rollers used and their corresponding spacing for each pass are as set out below.

| Pass No. | Roller | Spacing |
|---|---|---|
| 1^{st} | 8as | 0.014 inch (0.350 mm) |
| 2^{nd} | 20st | 0.023 inch (0.575 mm) |
| 3^{rd} | 36st | 0.004 inch (0.100 mm) |

The above identified rollers are supplied with the apparatus and the designation (e.g. "8as") distinguishes the coarseness of the surface structure of the roller. The smaller the number in the roller designation the coarser the roller.

As indicated above, the mixture of the sea salt and Soda-Lo® Extra Fine was subjected to a first pass through the roller mill using the 8as rollers (spacing as indicated above) followed by successive passes through the machine using the 20st and 36st rollers (with their respective spacings).

For each pass through the roller mill the processing time was a few seconds.

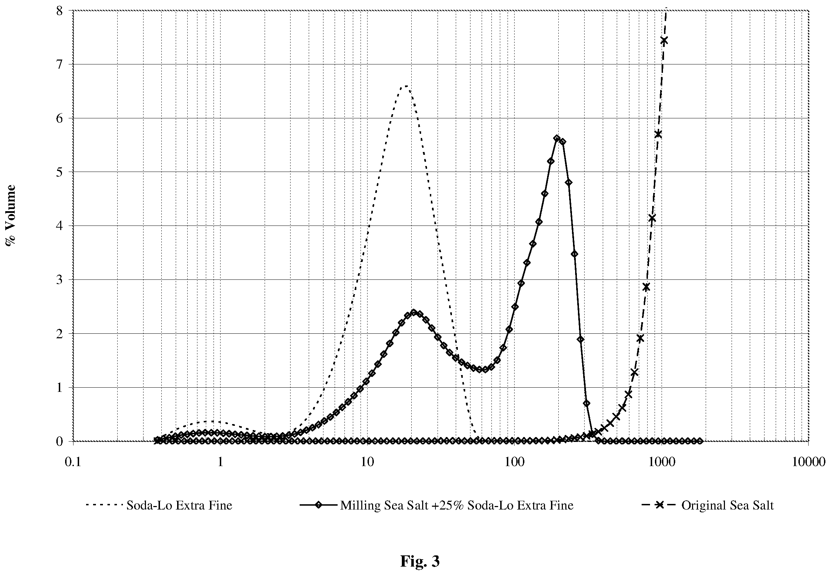

The particle size distribution of the resulting salt composition is shown in Fig. 3 which, for the sake of completeness, also includes the particle size distributions for Soda-Lo® Extra Fine and the original sea salt. It can be seen from Fig. 3 that the salt composition produced in accordance with this Example had a bimodal particle size distribution with substantially all particles having a size below about 400 µm. In the bimodal distribution, there was a mean of 200 µm with a relatively narrow particle size distribution about this mean. The particle size distribution of the composition does not show any aggregation of the milled sea salt crystals.

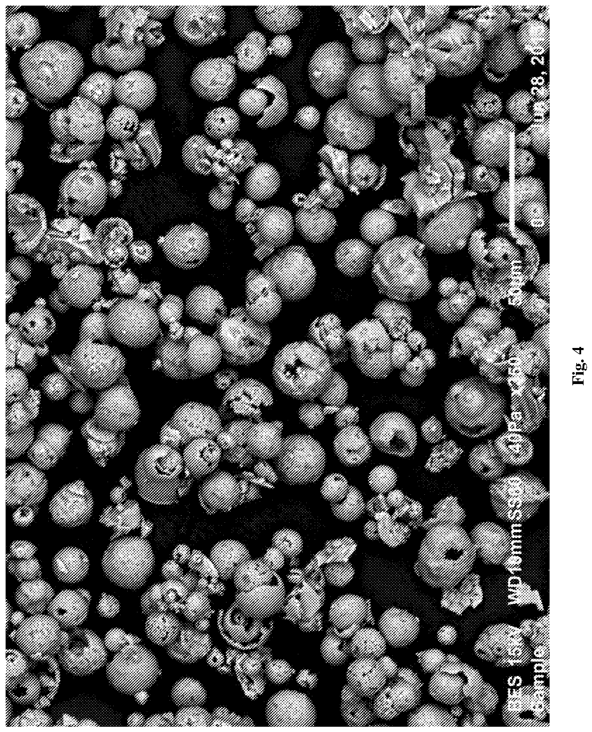

The salt composition prepared in this Example was sieved using a #400 Mesh (38 µm) sieve. A SEM of the material that passed through the sieve was then obtained and is shown in Fig. 4 (magnification x350). Comparison of Fig. 4 with Fig. 2 shows that the hollow particle structure of the Soda-Lo® Extra Fine was substantially retained during the milling procedure on the Gran-U-Lizer.

### Example 2 (Comparative)

This Example demonstrates production of a salt composition obtained by milling sea salt with a roller mill and then blending the milled sea salt with Soda-Lo® Extra Fine.

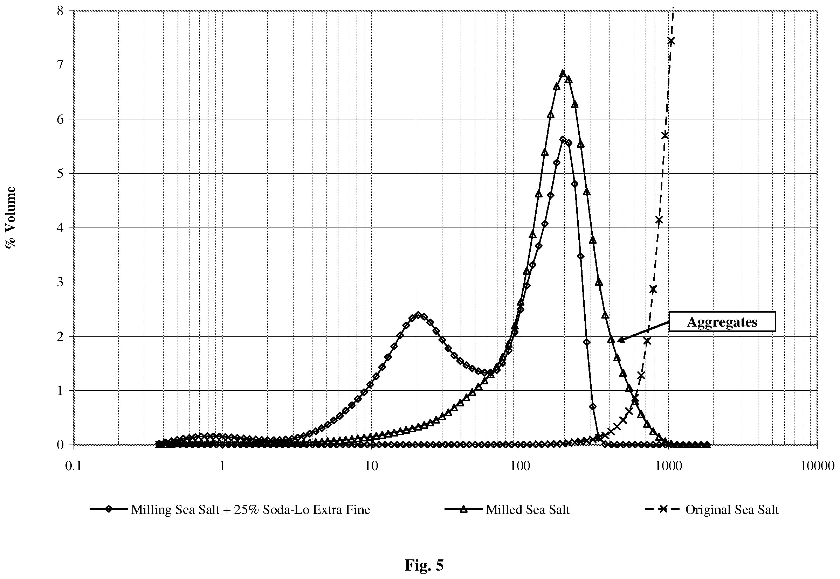

Sea salt (having the same particle size distribution as shown in Fig. 1) was milled using the LPP Gran-U-Lizer described in Example 2. More specifically, the sea salt was milled using three passes through the Gran-U-Lizer with each of the 1^{st}, 2^{nd} and 3^{rd} passes using the same respective roller set as shown above. For each pass through the roller mill the processing time was a few seconds.
The particle size distribution of the resulting sea salt is shown in Fig. 5 which, for the sake of comparison, also includes the particle size distribution of the salt composition produced in Example 1 and that of the original sea salt.

As can be seen from Fig. 5, the milled sea salt produced in accordance with the present Example had a particle size extending up to about 1000 µm. This compared to a particle size of up to about 400 µm obtained in the composition produced under identical milling conditions in accordance with Example 1 and is indicative of aggregate formation.

27g of the milled sea salt produced in accordance with this Example and 9g of Soda-Lo® Extra Fine were introduced into a V-blender which, after sealing, was rotated at 45 rpm for 30 minutes.

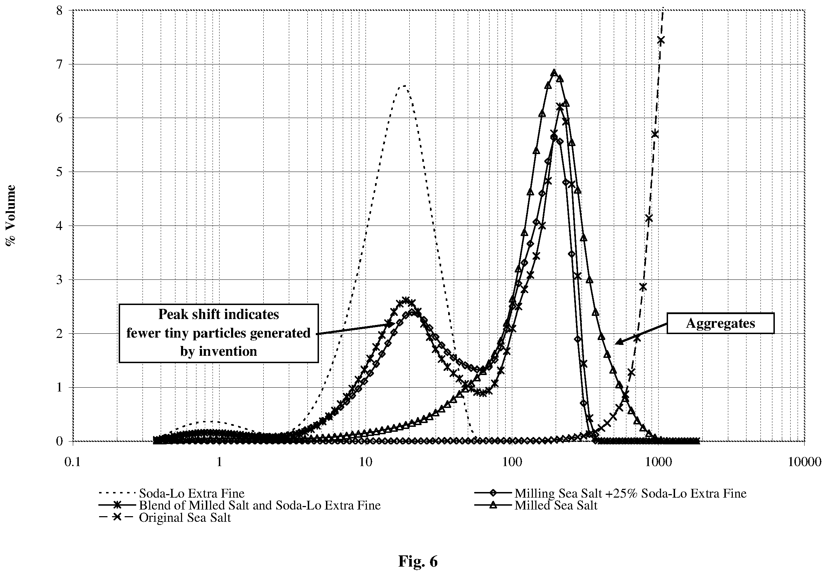

The particle size distribution of the resulting blended product is shown in Fig. 6 which, for the purposes of comparison, includes those for (i) Soda-Lo® Extra Fine, (ii) the original sea salt, (iii) the salt composition produced in accordance with Example 1, and (iv) the milled sea salt.

As can been seen from Fig. 6, the particle size distributions of the blended product produced in accordance with the present Example and the salt composition produced in accordance with Example 1 were very similar, with both displaying maximum particle sizes up to about 300 µm (in contrast to the aggregate formation shown in the particle size distribution for the original sea salt). Additionally, the particle size distribution of the blended product of the present Example had a peak just below 20 µm whereas the corresponding peak in the particle size distribution of the composition prepared in Example 1 was just above 20 µm, indicating that the procedure of Example 1 (i.e. in accordance with the invention) produced fewer tiny particles than the procedure of Example 2.

### Example 3 (Invention)

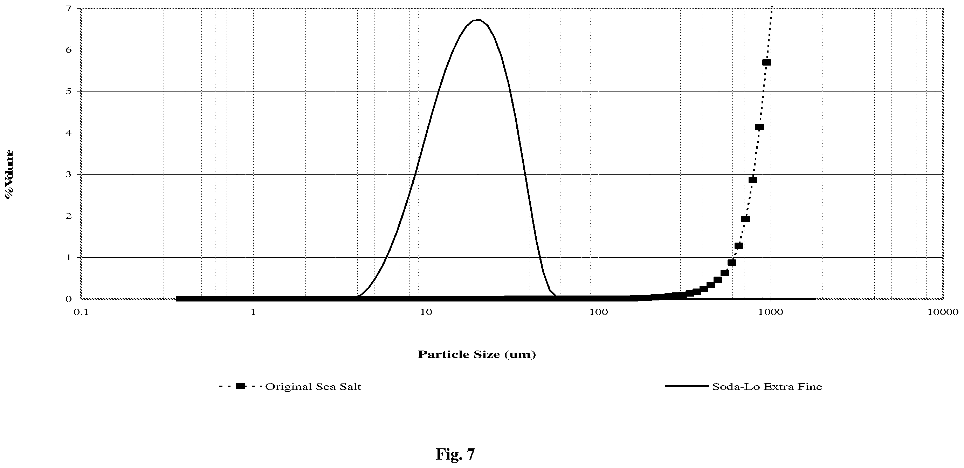

This Example demonstrates production of a salt composition in accordance with the invention by the simultaneous milling and blending of Soda-Lo® Extra Fine and sea-salt, for which particle size distributions are shown in Fig. 7.

A mixture comprised of 75% by weight of the sea-salt and 25% by weight of Soda-Lo® Extra Fine was prepared by loosely mixing these two components together to produce a coarse (i.e. non-uniform) blend thereof.

700g of the resulting mixture were then added to a two litre (approx) ceramic ball mill jar into which 2.2 kg of burundum cylindrical grinding media (20.3 mm (13/16 inch)) had previously been introduced.

The mill jar was then sealed, placed on a roller and rotated at 80 rpm. Rotation of the mill jar subjected the mixture to combine blending and milling and was continued for a sufficient period of time so that the sea-salt was reduced to a mean particle size by volume of 200 µm.

It was found that a period of 60 minutes rotation was required to achieve the desired particle size.

The contents of the mill jar were discharged and the grinding media separated with a sieve.
The resulting composition was free-flowing and non-agglomerating.

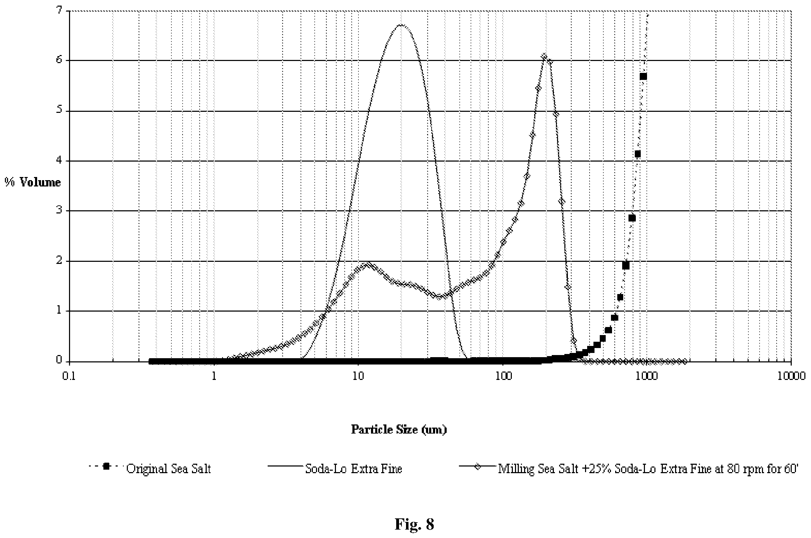

The particle size distribution of the composition was measured and the result is shown in Fig. 8 which, for the purposes of comparison, also includes the particle size distributions for the original Soda-Lo® Extra Fine and sea-salt starting materials. It can be seen from Fig. 3 that the milled sea-salt was of relatively narrow particle size distribution with a mean size of 200 µm and with substantially all particles having a size below about 400 µm.

### Example 4 (Comparative)

This Example demonstrates production of a salt composition obtained by blending pre-milled salt with Soda-Lo® Extra Fine.

700 g of the sea-salt (particle size distribution as shown in Fig. 7) were added to the same mill jar as used in Example 3 (and into which the same grinding media had previously been introduced). After sealing, the mill jar was placed on a roller and rotated at 80 rpm for a sufficient period of time so that the resulting milled sea-salt had a mean particle size by volume of 200 µm.

Somewhat surprisingly, it was found that a period of 135 minutes was required to obtain the milled sea-salt with a mean particle size by volume of 200 microns, in contrast to the period of 60 minutes required in Example 3 to reduce the sea-salt to the same mean particle size.

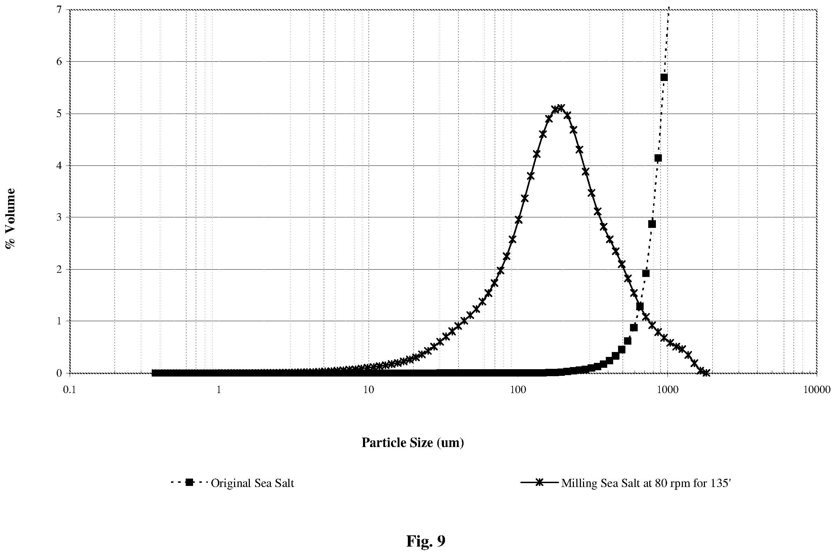

After emptying the contents of the jar and sieving to remove the grinding media, the particle size distribution of the milled sea-salt was measured and the result is shown in Fig. 9 which, for convenience, also includes the particle size distribution of the original sea-salt. It can be seen from Fig. 9 that the milled sea-salt had a mean particle size of 200 µm but the size distribution was relatively broad and extended up to about 1100 µm (the maximum particle size of the milled salt), demonstrating formation of aggregates (not seen in the composition produced in Example 3 using the same milling procedure).

A mixture comprised of 75% by weight of the milled sea-salt and 25% by weight of Soda-Lo® Extra Fine was prepared by coarsely blending these two components together. A 75g portion of the mixture was then introduced into a V-blender. After sealing, the V-blender was put onto the roller and rotated at 35 rpm for 60 minutes to produce an intimate blend of the milled sea-salt and Soda-Lo® Extra Fine.

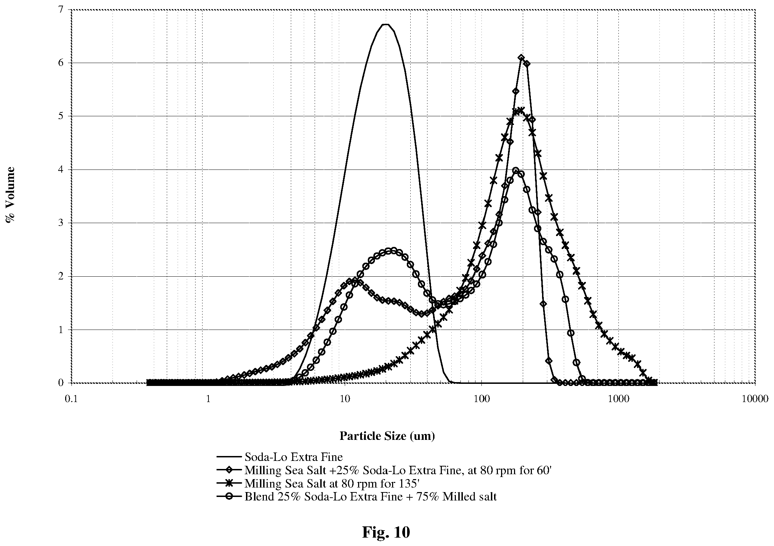

The particle size distribution of the resulting composition was measured and is shown in Fig. 10 which, for convenience, also includes the particle size distributions of (a) Soda-Lo® Extra Fine, (b) the composition produced in Example 3, and (c) the milled salt produced in accordance with the first part of this Example.

As can be seen from Fig. 10, the composition produced in accordance with the present Example (i.e. obtained by blending milled salt with Soda-Lo® Extra Fine) had a maximum particle size between that of the composition of Example 3 and that of the milled sea-salt, and also displayed aggregate formation (although not as pronounced as in the case of the milled sea-salt).

### Example 5

This Example is similar to Example 4 but using varying amounts of the Soda-Lo® Extra Fine relative to the milled salt and provides a study of the effect of these varying amounts of Soda-Lo® Extra on the particle size distributions of the resulting compositions.

The procedure of Example 4 was repeated but to provide a series of blends of the milled sea-salt and Soda-Lo® Extra Fine comprising 15% to 35% by weight of the latter in 5% intervals.

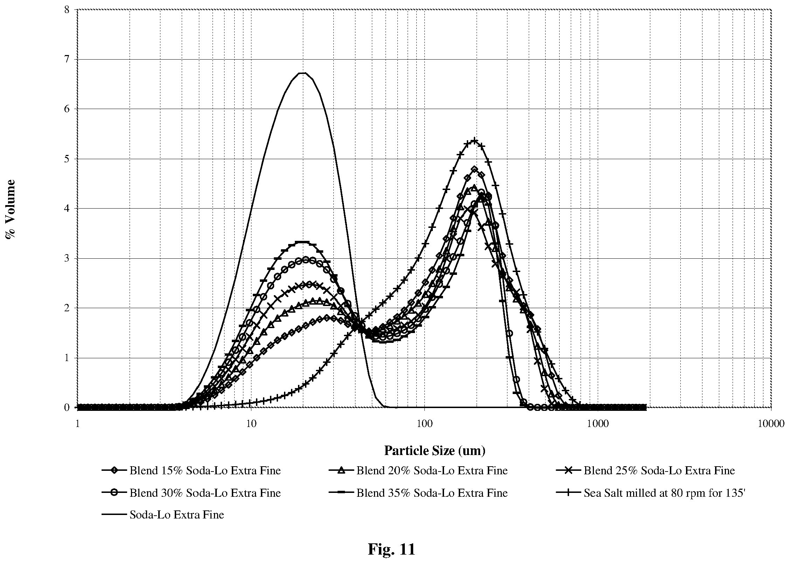

The particle size distribution of the resulting compositions were measured and are shown in Fig. 11, which also includes for the purposes of comparison the particle size distributions of Soda-Lo® Extra Fine and the milled sea-salt.

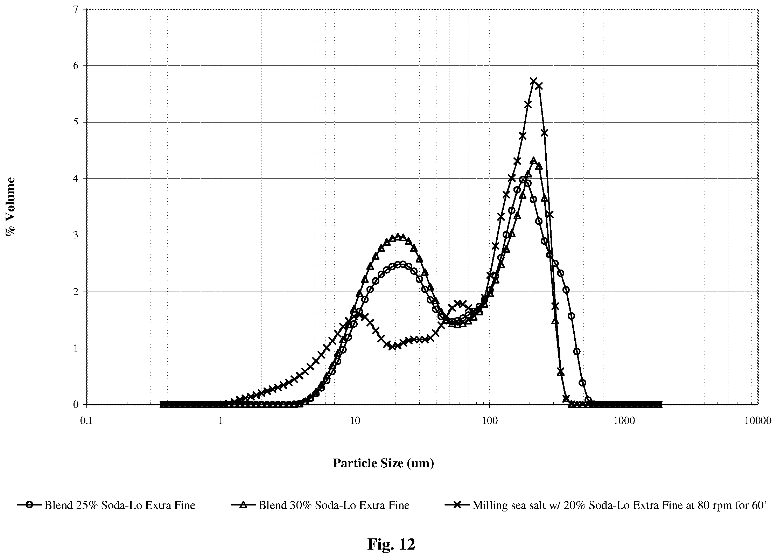

As can been seen from Fig. 11, the compositions comprising 15%, 20% and 25% of the Soda-Lo® Extra Fine showed a tendency to agglomerate. These agglomerates were disintegrated by the use of higher amounts of Soda-Lo, with agglomeration being substantially absent in the compositions comprising 30% and 35% of the Soda-Lo® Extra Fine. There was thus a transition between 25% and 30% Soda-Lo® Extra Fine since, in the former case, the particle size distribution shows the presence of agglomerates whereas these are absent in the latter case (30% SodaLo® Extra Fine). For the purposes of clarity, Fig. 12 shows the particle size distributions of the 25% and 30% products and also, for the purposes of comparison, the particle size distribution of the product of Example 1.

The following conclusions are readily drawn from the above Examples.

The method of the present invention (as exemplified in Examples 1 and 3 above) provides the major benefit of higher milling efficiency by eliminating (or at least breaking down) formation of aggregates of salt crystals during the milling process.

Although Examples 4 and 5 demonstrate that a non-agglomerating salt composition prepared by blending pre-milled sea-salt and Soda-Lo® Extra Fine can be obtained, this is only using higher amounts of the Soda-Lo® Extra Fine than required in Example 3 (i.e. a procedure in accordance with the invention). Although the results of Examples 3 and 4 were obtained by milling using cylindrical grinding media, these results can clearly be extrapolated (and are applicable to) the roller-milling procedure used in Example 1.

The present invention allows the rapid production of a salt composition incorporating sodium chloride crystals of small size, without the need to take special steps to prevent agglomeration of these small sized crystals. The overall time for production of the composition is less than that involved in milling salt and then blending the milled salt with the Soda-Lo®.

## Claims

1. A method of producing a salt composition comprising comminuting a first particulate fraction comprised of sodium chloride crystals having a mean particle size by volume of at least 500 µm, in the presence of a second particulate fraction which is a salt product comprised of particles which contain (a) sodium chloride and (b) an organic material that is a solid at ambient temperature and which have a structure comprised of individual crystallites of sodium chloride attached together in the particles of the product wherein at least 95% by volume of the particles of the salt product have a size less than 100 µm and wherein particles of the product comprise hollow particles formed of an outer shell of said crystallites.

2. A method as claimed in claim 1 wherein said comminuting is effected to produce a salt composition in which sodium chloride crystals have a size up to a maximum of 400 µm and the salt composition has a particle size distribution by volume in which there is a mean particle size in the range of 150 µm to 250 µm.

3. A method as claimed in claim 2 wherein the comminuting and blending are effected to produce a salt composition in which said mean is in the range of 180 µm to 220 µm.

4. A method as claimed in any one of claims 1 to 3 wherein the first particulate fraction comprises a major proportion by weight of the combined weight of the first and second particulate fractions.

5. A method as claimed in claim 4 wherein the first particulate fraction comprises 65% by weight to 85% by weight and the second particulate fraction comprises 15% by weight to 35% by weight, the percentages being based on the combined weight of the first and second particulate fractions.

6. A method as claimed in any one of claims 1 to 5 wherein at least 95% by volume of said particles of the salt product have a size less than 50 µm.

7. A method as claimed in claim 6 wherein the salt product has a mean particle size in the range of 5 µm to 30 µm.

8. A method as claimed in any one of claims 1 to 7 wherein at least 50% of said particles of the salt product are hollow.

9. A method as claimed in any one of claims 1 to 8 wherein said organic material is a polymeric material selected from the group consisting of a carbohydrate, a protein and synthetic organic polymer.

10. A method as claimed in any one of claims 1 to 9 wherein said comminuting is effected by milling

11. A method as claimed in any one of claims 1 to 10 wherein there is no substantial fragmentation of the hollow particles of the salt product.

12. A method as claimed in any one of claims 1 to 11 wherein the first and second particulate fractions are thoroughly blended prior to said comminuting.

13. A method as claimed in any one of claims 1 to 12, wherein a third "non-salt" particulate fraction is also present during said comminuting.

14. A method as claimed in claim 13 wherein said third particulate fraction comprises at least one spice.

15. The use of a salt composition obtained by the method of any one of claims 1 to 12 for:
(i) tenderising, curing or seasoning meats with salt,
(ii) canning using salt, or
(iii) pickling vegetables using salt

## Patentansprüche

1. Verfahren zur Herstellung einer Salzzusammensetzung, umfassend das Zerkleinern einer ersten teilchenförmigen Fraktion, die Natriumchloridkristalle umfasst, die eine mittlere Teilchengröße, auf das Volumen bezogen, von mindestens 500 µm aufweisen, in Gegenwart einer zweiten teilchenförmigen Fraktion, die ein Salzprodukt ist, das aus Teilchen besteht, die (a) Natriumchlorid und (b) ein organisches Material enthalten, das bei einer Umgebungstemperatur ein Feststoff ist und das eine Struktur aufweist, die aus einzelnen Kristalliten von Natriumchlorid besteht, die in den Teilchen des Produkts zusammengebunden sind, wobei mindestens 95 Volumen-% der Teilchen des Salzprodukts eine Größe von weniger als 100 µm aufweisen und wobei Teilchen des Produkts hohle Teilchen umfassen, die aus einem Außenmantel der Kristallite gebildet sind.

2. Verfahren nach Anspruch 1, wobei das Zerkleinern zum Herstellen einer Salzzusammensetzung ausgeführt wird, wobei die Natriumchloridkristalle eine Größe von bis zu einem Maximum von 400 µm aufweisen und die Salzzusammensetzung eine Teilchengrößenverteilung, auf das Volumen bezogen, aufweist, wobei eine mittlere Teilchengröße im Bereich von 150 µm bis 250 µm vorliegt.

3. Verfahren nach Anspruch 2, wobei das Zerkleinern und Abmischen zum Herstellen einer Salzzusammensetzung ausgeführt werden, wobei der Mittelwert im Bereich von 180 µm bis 220 µm liegt.

4. Verfahren nach einem der Ansprüche 1 bis 3, wobei die erste teilchenförmige Fraktion einen Hauptanteil, auf das Gewicht bezogen, des kombinierten Gewichts der ersten und der zweiten teilchenförmigen Fraktion umfasst.

5. Verfahren nach Anspruch 4, wobei die erste teilchenförmige Fraktion 65 Gew.-% bis 85 Gew.-% umfasst und die zweite teilchenförmige Fraktion 15 Gew.-% bis 35 Gew.-% umfasst, wobei die Prozentsätze auf dem kombinierten Gewicht der ersten und der zweiten teilchenförmigen Fraktion basieren.

6. Verfahren nach einem der Ansprüche 1 bis 5, wobei mindestens 95 Volumen-% der Teilchen des Salzprodukts eine Größe von weniger als 50 µm aufweisen.

7. Verfahren nach Anspruch 6, wobei das Salzprodukt eine mittlere Teilchengröße im Bereich von 5 µm bis 30 µm aufweist.

8. Verfahren nach einem der Ansprüche 1 bis 7, wobei mindestens 50 % der Teilchen des Salzprodukts hohl sind.

9. Verfahren nach einem der Ansprüche 1 bis 8, wobei das organische Material ein polymeres Material ist, das aus der Gruppe ausgewählt ist bestehend aus einem Kohlehydrat, einem Protein und einem synthetischen organischen Polymer.

10. Verfahren nach einem der Ansprüche 1 bis 9, wobei das Zerkleinern durch Mahlen ausgeführt wird.

11. Verfahren nach einem der Ansprüche 1 bis 10, wobei keine wesentliche Fragmentierung der hohlen Teilchen des Salzprodukts erfolgt.

12. Verfahren nach einem der Ansprüche 1 bis 11, wobei die erste und die zweite teilchenförmige Fraktion vor dem Zerkleinern gründlich abgemischt werden.

13. Verfahren nach einem der Ansprüche 1 bis 12, wobei eine dritte teilchenförmige "Nichtsalz-" Fraktion ebenfalls während des Zerkleinerns vorliegt.

14. Verfahren nach Anspruch 13, wobei die dritte teilchenförmige Fraktion mindestens ein Gewürz umfasst.

15. Verwendung einer Salzzusammensetzung, die durch das Verfahren nach einem der Ansprüche 1 bis 12 erhalten wird, zum:
(i) Zartmachen, Pökeln oder Würzen von Fleischsorten mit Salz,
(ii) Eindosen unter Anwendung von Salz oder
Action albud
(iii) Einmachen von Gemüsen unter Anwendung von Salz.

## Revendications

1. Procédé de production d'une composition de sel comprenant le broyage fin d'une première fraction de particules composée de cristaux de chlorure de sodium présentant une taille moyenne de particule en volume d'au moins 500 µm, en la présence d'une seconde fraction de particules qui est un produit salin composé de particules qui contiennent (a) du chlorure de sodium et (b) un matériau organique qui est solide à la température ambiante et qui présente une structure composée de cristallites individuels de chlorure de sodium fixés ensemble dans les particules du produit où au moins 95 % en volume des particules du produit salin présentent une taille inférieure à 100 µm et où les particules du produit comprennent des particules creuses formées d'une enveloppe externe desdits cristallites.

2. Procédé tel que revendiqué selon la revendication 1 dans lequel ledit broyage fin est effectué pour produire une composition de sel dans laquelle les cristaux de chlorure de sodium présentent une taille allant jusqu'à un maximum de 400 µm et la composition de sel présente une distribution des tailles de particules en volume dans laquelle il existe une taille moyenne de particule située dans la plage de 150 à 250 µm.

3. Procédé tel que revendiqué selon la revendication 2 dans lequel le broyage fin et le mélange sont effectués pour produire une composition de sel dans laquelle ladite moyenne se situe dans la plage de 180 µm à 220 µm.

4. Procédé tel que revendiqué selon l'une quelconque des revendications 1 à 3 dans lequel la première fraction de particules comprend une proportion majeure en poids du poids combiné de la première et de la seconde fraction de particules.

5. Procédé tel que revendiqué selon la revendication 4 dans lequel la première fraction de particules comprend de 65 % en poids à 85 % en poids et la seconde fraction de particules comprend de 15 % en poids à 35 % en poids, les pourcentages étant basés sur le poids combiné de la première et de la seconde fraction de particules.

6. Procédé tel que revendiqué selon l'une quelconque des revendications 1 à 5 dans lequel au moins 95 % en volume desdites particules du produit salin présentent une taille inférieure à 50 µm.

7. Procédé tel que revendiqué selon la revendication 6 dans lequel le produit salin présente une taille moyenne de particule située dans la plage de 5 µm à 30 µm.

8. Procédé tel que revendiqué selon l'une quelconque des revendications 1 à 7 dans lequel au moins 50 % desdites particules du produit salin sont creuses.

9. Procédé tel que revendiqué selon l'une quelconque des revendications 1 à 8 dans lequel ledit matériau organique est un matériau polymère sélectionné dans le groupe constitué d'un hydrate de carbone, d'une protéine et d'un polymère organique synthétique.

10. Procédé tel que revendiqué selon l'une quelconque des revendications 1 à 9 dans lequel ledit broyage fin est effectué par broyage.

11. Procédé tel que revendiqué selon l'une quelconque des revendications 1 à 10 dans lequel il n'existe pas de fragmentation substantielle des particules creuses du produit salin.

12. Procédé tel que revendiqué selon l'une quelconque des revendications 1 à 11 dans lequel la première et la seconde fraction de particules sont mélangées de manière approfondie avant ledit broyage fin.

13. Procédé tel que revendiqué selon l'une quelconque des revendications 1 à 12, dans lequel une troisième fraction de particules « non-salines » est également présente durant ledit broyage fin.

14. Procédé tel que revendiqué selon la revendication 13 dans lequel ladite troisième fraction de particules comprend au moins une épice.

15. Utilisation d'une composition de sel obtenue par le procédé selon l'une quelconque des revendications 1 à 12 pour:
(i) l'attendrissement, la maturation ou l'assaisonnement des viandes avec du sel,
(ii) la mise en conserve en utilisant du sel, ou
(iii) la mise en saumure de légumes en utilisant du sel.
